# EUROPEAN PATENT APPLICATION

(11) **EP 4 821 729 A1**
(43) Date of publication of application: **14.10.2026**
(21) Application number: 26170854.9
(22) Date of filing: 07.04.2026
(51) Int. Cl.: B60K 11/06, B62D 35/00

(54) **ROAD CAR WITH REAR DUCT ON THE ROOF**

(30) Priority: 09.04.2025 IT 202500007758
(71) Applicant: FERRARI S.p.A., 41100 Modena (IT)
(72) Inventor: MARIELLA, Luciano, 41100 MODENA (IT); FULGENZI, Gianmaria, 41100 MODENA (IT); JASINI, Denald, 41100 MODENA (IT); LEMERCIER, Johann Frederic Max, 41100 MODENA (IT); MERLO, Matteo Domenico, 41100 MODENA (IT); ZANCHINI, Michele, 41100 MODENA (IT)
(74) Representative: Studio Torta S.p.A.

(57) **Abstract**

A road car is provided with a support frame (2) for a passenger compartment (4), with an outer body (5) configured to define a front compartment (6) delimited by a front bumper (7) and by a front hood (8) and a rear compartment (9) delimited by a rear hood (10), with a front duct (12) extending between the front bumper (7) and the front hood (8) and configured to house a radiator (13) on the inside, and with a rear duct (16) obtained through the outer body (5) and under the rear hood (10) to receive at least part of an air flow fed along the front duct (12).

## Description

### CROSS-REFERENCE TO RELATED APPLICATIONS

This patent application claims priority from Italian patent application no. 102025000007758 filed on April 9, 2025, the entire disclosure of which is incorporated herein by reference.

### TECHNICAL FIELD

The invention relates to a road car.

### BACKGROUND

In particular, the invention relates to a road car of the kind comprising a support frame; a passenger compartment configured to accommodate at least one driver on the inside; an outer body; a front compartment obtained in front of the passenger compartment and delimited by a front bumper and a front hood; a rear compartment obtained behind the passenger compartment and delimited by a rear hood and a rear bumper; and a driving motor for operating the road car mounted in the rear compartment.

The road car further comprises a front duct extending between the front bumper and the front hood; a radiator mounted in the front compartment and along the front duct; and a rear wing configured to generate a vertical downward load on the road car commonly known as downforce.

During normal driving, the road car is hit, at the front, by an air flow that is divided into a first air flow and a second air flow.

The first air flow is led above the front hood and along the body and hits the rear wing with a relatively high flowing speed and a relatively low temperature.

The second air flow is led through the front bumper, along the front duct and through the front hood, is heated by the radiator and hits the rear wing with a relatively low flowing speed and a relatively high temperature.

Since the second air flow hits the rear wing with a relatively low flowing speed and a relatively high temperature, known road cars of the type described above suffer from some drawbacks, which are mainly due to the fact that the downforce generated on the rear wing by the combined action of said first and second air flows is relatively small.

### SUMMARY

The object of the invention is to provide a road car that does not suffer from the drawbacks discussed above and can be manufactured in simple and economic fashion.

According to the invention, there is provided a road car as claimed in the appended claims.

### BRIEF DESCRIPTION OF THE DRAWINGS

The invention will now be described with reference to the accompanying drawings showing a non-limiting embodiment thereof, wherein:
figure 1 is a schematic perspective view, with parts removed for greater clarity, of a preferred embodiment of the road car according to the invention; and
figure 2 is a schematic side view, with parts removed for greater clarity, of the road car of figure 1.

### DESCRIPTION OF EMBODIMENTS

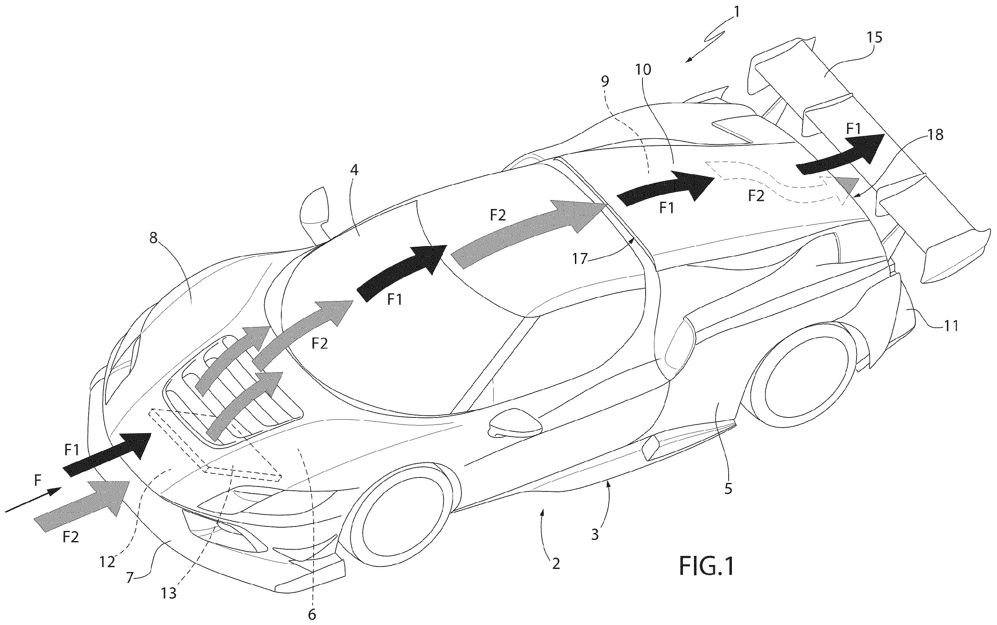

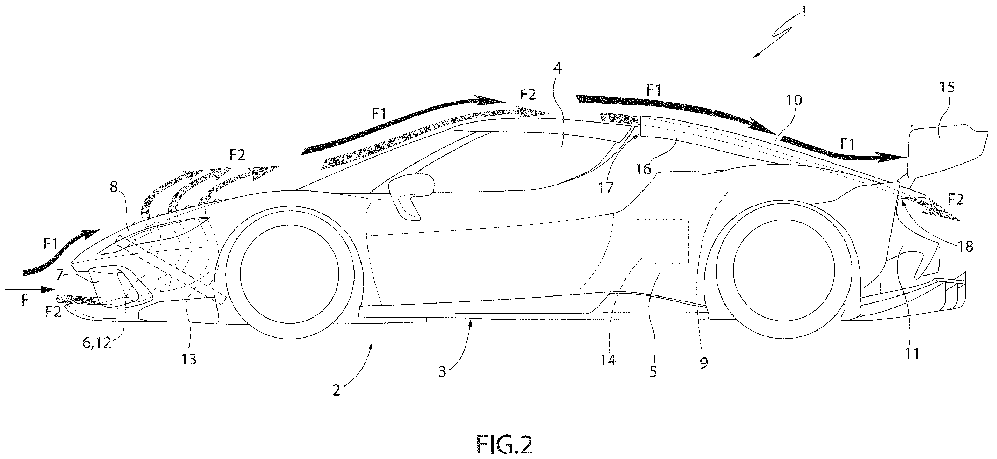

With reference to figures 1 and 2, number 1 indicates, as a whole, a road car comprising a support frame 2 defining part of a lower floor 3; a passenger compartment 4 mounted on the floor 3 and configured to accommodate at least one driver on the inside; and an outer body 5 configured to delimit the road car 1 on the outside.

The body 5 defines a front compartment 6, which is obtained in front of the passenger compartment 4 and is delimited by a front bumper 7 and by a front hood 8, and a rear compartment 9, which is obtained behind the passenger compartment 4 and is delimited by a rear hood 10 and by a rear bumper 11.

The road car 1 further comprises a front duct 12 extending between the front bumper 7 and the front hood 8; a radiator 13 mounted in the front compartment 6 and along the front duct 12; a driving motor 14 for operating the road car 1 housed in the rear compartment 9; and a rear wing 15 mounted above the rear hood 10 and configured to generate a vertical downward load, namely a downforce, on the road car 1.

During normal driving, the road car 1 is hit, at the front, by an air flow F that is divided into a first air flow F1 and a second air flow F2.

The first flow F1 is led above the front hood 8 and along the body 5 and hits the rear wing 15 with a relatively high flowing speed and a relatively low temperature.

The second flow F2 is led first through the front bumper 7 and along the front duct 12, is heated by the radiator 13 and is then led through the front hood 8 and along the body 5 with a relatively low speed and a relatively high temperature.

The second flow F2 is further led along at least one rear duct 16, which extends behind the passenger compartment 4, is obtained under the rear hood 10 and further extends between an inlet mouth 17 obtained through the roof of the road car 1 and an outlet mouth 18 obtained through the rear hood 10 or the rear bumper 11.

The rear duct 16 further extends through the rear compartment 9 to cool the driving motor 14.

According to a variant that is not shown herein, the body 5 comprises at least one front panel, which is movable between an opening position and a closing position for opening and closing the inlet mouth 17 due to the thrust of an operating device.

According to a further variant that is not shown herein, the number of rear ducts 16 is other than one and each rear duct 16 has the features described above.

Preferably but not necessarily, the rear hood 10 is movable between an opening position and a closing position for opening and closing the inlet mouth 17 and between an opening position and a closing position for opening and closing the outlet mouth 18.

The presence and configuration of the rear duct 16 make it possible to orient the second flow F2 under the rear wing 15, to prevent the second flow F2 from hitting the rear wing 15 and to limit the action of the air on the rear wing 15 to the first flow F1 alone.

Consequently, the rear wing 15 is subjected to the action of the sole first flow F1, namely of an air flow having a relatively high speed and a relatively low temperature, and therefore generates a relatively high downward load, namely a relatively high downforce.

## Claims

1. A road car comprising a support frame (2); a passenger compartment (4); an outer body (5); a front compartment (6) obtained in front of the passenger compartment (4) and delimited by a front bumper (7) and by a front hood (8); a rear compartment (9) obtained behind the passenger compartment (4) and delimited by a rear hood (10); a front duct (12) extending between the front bumper (7) and the front hood (8); a radiator (13) mounted in the front compartment (6) and along the front duct (12); a driving motor (14) for operating the road car; and a rear wing (15) configured to generate a vertical downward load acting upon the road car; and **characterized in that** it further comprises at least one rear duct (16) obtained through the outer body (5) and under the rear hood (10) to receive at least part of an air flow (F2) fed along the front duct (12).

2. The road car according to claim 1, wherein the driving motor (14) is housed in the rear compartment (9).

3. The road car according to claim 2, wherein the rear duct (16) extends through the rear compartment (9) to cool the driving motor (14).

4. The road car according to any one of the preceding claims, wherein the rear duct (16) is obtained behind the passenger compartment (4) and extends between an inlet mouth (17) and an outlet mouth (18) obtained through the outer body (5).

5. The road car according to claim 4, wherein the outer body (5) comprises at least one front panel movable between an opening position and a closing position to open and close said inlet mouth (17).

6. The road car according to claim 5 and further comprising an operating device to move the front panel between said opening and closing positions.

7. The road car according to any one of the claims from 4 to 6, wherein the inlet mouth (17) is obtained through a roof of the outer body (5) and the outlet mouth (18) is obtained through the rear hood (10) of the outer body (5).

8. The road car according to any one of the claims from 4 to 6, wherein the inlet mouth (17) is obtained through a roof of the outer body (5) and the outlet mouth (18) is obtained through a rear bumper (11) of the outer body (5).
